# EUROPEAN PATENT APPLICATION

(11) **EP 4 763 567 A1**
(43) Date of publication of application: **24.06.2026**
(21) Application number: 25216932.1
(22) Date of filing: 19.11.2025
(51) Int. Cl.: B60K 28/06, B60W 50/14

(54) **DRIVING SUPPORT CONTROL DEVICE, DRIVING SUPPORT METHOD, AND COMPUTER PROGRAM**

(30) Priority: 19.12.2024 JP 2024224245
(71) Applicant: Toyota Jidosha Kabushiki Kaisha, Toyota-shi, Aichi-ken 471-8571 (JP)
(72) Inventor: TANAKA, Yusuke, TOYOTA-SHI, AICHI-KEN, 471-8571 (JP); FUKAYA, Motohiro, TOYOTA SHI, AICHI-KEN, 471-8571 (JP); TOSHIMA, Kohei, TOYOTA-SHI, AICHI-KEN, 471-8571 (JP); MORIMOTO, Kazuhiro, TOYOTA-SHI, AICHI-KEN, 471-8571 (JP)
(74) Representative: Cabinet Beau de Loménie

(57) **Abstract**

The driving support control device (6) for a vehicle (100) is configured to execute driving support for responding to driver abnormality in response to it being judged (S1) that a driver of the vehicle (100) is in an abnormal state in which it is difficult to continue driving of the vehicle (100), suspend (S6) the driving support when a predetermined suspension condition is established during the driving support, and when it is judged (S2) that the driver is not in the abnormal state during the driving support, change (S4) content of the suspension condition so as to facilitate suspension of the driving support.

## Description

### TECHNICAL FIELD

The present invention relates to a driving support control device, a driving support method, and a computer program.

### BACKGROUND ART

Patent Literature 1 discloses a conventional vehicle driving control device which is configured to judge whether a driver is in an abnormal state, and execute deceleration and stop control decelerating the vehicle and maintaining the vehicle in a stopped state, when the driver is in the abnormal state.

### CITATION LIST

### PATENT LITERATURE

PTL 1 Japanese Unexamined Patent Publication (Kokai) No. 2021-109559

### SUMMARY

### TECHNICAL PROBLEM

Even when the driver is in a normal state, it is possible that the system may mistakenly determine an abnormal state and execute driving support (driving support for driver abnormality) for responding to driver abnormality, such as deceleration and stop control. Therefore, it is necessary to enable the driver to suspend the driving support for driver abnormality by executing a predetermined operation in the driving support.

However, if the predetermined operation is simple, there is a risk that it could be unintentionally performed by an unconscious driver in an abnormal state, causing the driving support for driver abnormality to be suspended despite the driver's abnormal state. On the other hand, if the predetermined driving operation is complex, it becomes difficult for the driver to suspend the driving support when it is executed despite the driver being in a normal state.

The present invention has been conceived in light of this problem, and an object thereof is to suppress the situation where the driver cannot suspend the driving support when the driving support for driver abnormality is executed despite the driver being in a normal state.

### SOLUTION TO PROBLEM

In order to solve the above problem, the driving support control device for a vehicle according to one aspect of the present invention is configured to execute driving support for responding to driver abnormality in response to it being judged that a driver of the vehicle is in an abnormal state in which it is difficult to continue driving of the vehicle, suspend the driving support when a predetermined suspension condition is established during the driving support, and when it is judged that the driver is not in the abnormal state during the driving support, change content of the suspension condition so as to facilitate suspension of the driving support.

Further, the driving support method according to one aspect of the present invention is performed by a control device of a vehicle, and includes executing driving support for responding to driver abnormality in response to it being judged that a driver of the vehicle is in an abnormal state in which it is difficult to continue driving of the vehicle, suspending the driving support when a predetermined suspension condition is established during the driving support, and changing content of the suspension condition so as to facilitate suspension of the driving support when it is judged that the driver is not in the abnormal state during the driving support.

Further, the computer program according to one aspect of the present invention causes a computer to execute processing of executing driving support for responding to driver abnormality in response to it being judged that a driver of the vehicle is in an abnormal state in which it is difficult to continue driving of the vehicle, suspending the driving support when a predetermined suspension condition is established during the driving support, and changing content of the suspension condition so as to facilitate suspension of the driving support when it is judged that the driver is not in the abnormal state during the driving support.

### ADVANTAGEOUS EFFECTS OF INVENTION

According to these aspects of the present invention, since the suspension condition of the driving support for driver abnormality is relaxed when the driving support is being executed despite the driver being in a normal state, situations in which the driver cannot suspend the driving support for driver abnormality can be prevented.

### BRIEF DESCRIPTION OF DRAWINGS

FIG. 1 is a schematic view of a vehicle according to an embodiment of the present invention.
FIG. 2 is a flowchart detailing suspension processing for driving support for driver abnormality according to an embodiment of the present invention.

### DESCRIPTION OF EMBODIMENTS

Embodiments of the present invention will be described in detail below with reference to the drawings. Note that in the following description, identical constituent elements have been assigned the same reference signs.

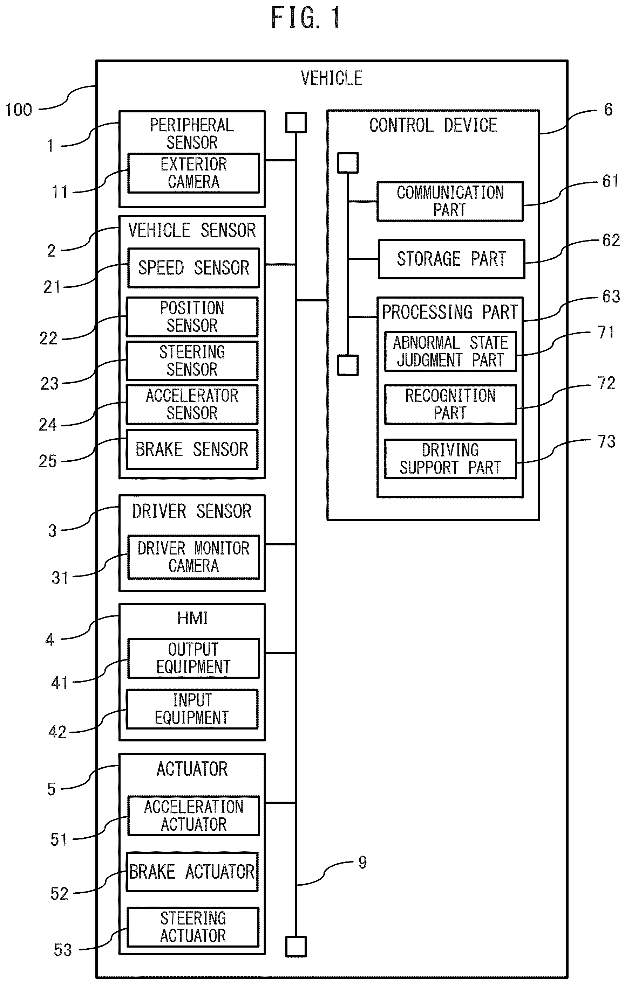

FIG. 1 is a schematic view of a vehicle 100 according to an embodiment of the present invention.

The vehicle 100 includes a peripheral sensor 1, a vehicle sensor 2, a driver sensor 3, a human machine interface (HMI) 4, an actuator 5, and a control device 6. The peripheral sensor 1, the vehicle sensor 2, the driver sensor 3, the HMI 4, the actuator 5, and the control device 6 are communicatively connected to each other via an in-vehicle network 9 which complies with a standard such as control device area network.

The peripheral sensor 1 is a sensor for generating peripheral data representing the situation around the vehicle 100. The vehicle 100 according to the present embodiment includes, as the peripheral sensor 1, one or a plurality of exterior cameras 11 for capturing the surroundings of the vehicle 100. The exterior camera 11 captures the surroundings of the vehicle 100 at a predetermined frame rate (for example, 10 [Hz] to 40 [Hz]) and generates a surrounding image showing the surroundings of the vehicle 100. The exterior camera 11 transmits the generated surrounding image to the control device 6 as surrounding data every time it generates a surrounding image.

In addition to the exterior camera 11, a ranging sensor for measuring the distance to a target or a feature present around the vehicle 100 may be provided as the peripheral sensor 1. Examples of the ranging sensor include LiDAR (Light Detection And Ranging) which irradiates radar light and measures distance based on the reflected light, and a millimeter wave radar sensor which irradiates radio waves and measures distance based on the reflected waves.

The vehicle sensor 2 is a sensor for acquiring vehicle data representing the state of the vehicle 100. The vehicle 100 according to the present embodiment includes, as the vehicle sensor 2, a speed sensor 21 for acquiring speed data representing the traveling speed of the vehicle 100, a position sensor 22 for acquiring current position data representing the current position of the vehicle 100 such as latitude and longitude, a steering sensor 23 for acquiring data related to steering operations such as steering grip, steering torque, steering angle, etc., an accelerator sensor 24 for acquiring data related to accelerator operation such as the amount of depression of the accelerator pedal, and a brake sensor 25 for acquiring data related to brake operation such as detection of operation input of the brake pedal. However, the vehicle sensor 2 is not limited to these sensors. Each type of data acquired by each sensor 21 to 25 is transmitted to the control device 6 as vehicle data.

The driver sensor 3 is a sensor for generating driver data representing the state of the driver. The vehicle 100 according to the present embodiment includes, as the driver sensor 3, a driver monitor camera 31 for capturing the appearance of the driver including the face of the driver. The driver monitor camera 31 captures the appearance of the driver at a predetermined frame rate (for example, 10 [Hz] to 40 [Hz]) and generates an appearance image showing the appearance of the driver. The driver monitor camera 31 transmits the generated appearance image to the control device 6 as driver data every time it generates an appearance image of the driver.

The HMI 4 is a user interface for exchanging information between the vehicle 100 and the occupants thereof. The HMI 4 includes output equipment 41 for notifying the vehicle occupants via the bodily senses (for example, vision, hearing, touch, etc.) of the vehicle occupants, and input equipment 42 with which the vehicle occupants can perform input operations and response operations. The output equipment 41 is, for example, a display (for example, a meter display, a center display, a heads-up display, etc.) and a speaker. The input equipment 42 is, for example, a touch panel and a microphone.

The HMI 4 notifies the vehicle occupants of information corresponding to the output signal received from the control device 6 via the output equipment 41, and transmits data input by the vehicle occupants to the control device 6 via the input equipment 42.

The HMI 4 may be installed in advance in the vehicle 100, or may be a terminal such as a smartphone owned by the vehicle occupants (driver and passengers). In the latter case, for example, information may be exchanged between the vehicle 100 and the terminal of the vehicle occupants by short-range wireless communication, or information may be exchanged indirectly via the server by communicating between the terminal of the vehicle occupants and an external server (not illustrated).

The actuator 5 is a device used for driving control of the vehicle 100. The vehicle 100 according to the present embodiment includes, as the actuator 5, an acceleration actuator 51 (for example, at least one of an engine and a motor) for performing acceleration control of the vehicle 100, a brake actuator 52 (for example, a hydraulic actuator) for performing brake control of the vehicle 100, and a steering actuator 53 (for example, a steering motor) for performing steering control of the vehicle 100.

The control device 6 is an electronic control unit (ECU) including a communication part 61, a storage part 62, and a processing part 63.

The communication part 61 includes an interface circuit for connecting the control device 6 to the in-vehicle network 9. The communication part 61 supplies various data received from the outside to the processing part 63. The communication part 61 also outputs various signals output from the processing part 63 to the outside.

The storage part 62 includes a storage medium such as a hard disk drive (HDD), a solid disk drive (SSD), or a semiconductor memory, and stores various computer programs and data used in the processing by the processing part 63.

The processing part 63 includes one or more central processing units (CPUs) and peripheral circuits therefor, and executes various computer programs stored in the storage part 62. The processing part 63 is, for example, a processor. The processing part 63 may further include other arithmetic circuits such as a logic arithmetic unit, a numerical arithmetic unit, or a graphic processing unit. The processing part 63 executes processing in accordance with the computer programs, thereby functioning as an abnormal state judgment part 71, a recognition part 72, and a driving support part 73, and operates as a functional part (module) for realizing predetermined functions. In the following description, when processing in which the functional parts 71 to 73 are the subject is described, it indicates that the processing part 63 is executing a program for realizing each of the functional parts 71 to 73.

Specific processing executed by the control device 6 will be described below. Specifically, the contents of each of the functional parts 71 to 73 realized by the processing part 63 executing the processing according to the computer program will be described.

The abnormal state judgment part 71 judges whether the driver has entered into an abnormal state (hereinafter simply referred to as an "abnormal state") in which it is difficult to continue driving due to, for example, a sudden change in physical condition, etc. In the present embodiment, the abnormal state judgment part 71 judges that the driver has entered into an abnormal state when a predetermined abnormality presumption state continues for a predetermined judgment time T1 [s].

The abnormality presumption state is a state in which the driver is considered to be in an abnormal state. Examples of abnormality presumption states include a state in which the driver has their eyes closed, a state in which the posture of the driver is distorted, and a state in which the driver is not operating the steering wheel unless the driving support that allows hands-free driving is being executed. A state in which the posture of the driver is distorted is, for example, a state in which the driver lies face down, looks down, or leans back due to muscle relaxation caused by loss of consciousness, or the head or upper body of the driver is tilted or fallen to the side, or a state in which the driver is arched due to rigidity caused by epilepsy, etc.

Whether the driver has their eyes closed, the posture of the driver is distorted, or the steering wheel is not being operated can be judged from, for example, the appearance of the driver based on the image of the driver monitor camera 31. Furthermore, whether the steering wheel is not being operated can be judged based on, for example, when data related to the steering operation is acquired by the steering sensor 23, such data and the image of the driver monitor camera 31.

The recognition part 72 recognizes targets and features around the vehicle 100. The recognition part 72 sequentially inputs the surrounding images received from the exterior camera 11 to a classifier, for example, to recognize targets in the surrounding images, such as other vehicles, motorcycles, and pedestrians, and features such as curbs, fences, and other similar structures (hereinafter referred to as "dividing features") and road markings (for example, dividing lines that define driving lanes). The classifier can be, for example, a convolutional neural network (CNN) having multiple convolution layers connected in series from the input side to the output side. The recognition part 72 also calculates the distances from the vehicle 100 to the targets and features using, for example, the standard sizes of the targets and features stored in the storage part 62 for each type of target and feature and the sizes of the targets and features recognized in the surrounding images, and calculates the positions of the targets and features. Note that the method of recognizing the targets and features is not limited to this method, and various known methods may be used for recognition.

The driving support part 73 controls the actuator 5 based on the targets and features recognized by the recognition part 72, and executes driving support involving driving control of the vehicle 100. In the present embodiment, the driving support part 73 can execute driving support involving driving control of the vehicle 100 at a driving control level of level 3 defined by the Society of Automotive Engineers (SAE), and specifically, a driving control level that does not require the driver to operate each of the actuators 51 to 53 and monitor the surroundings. The driving support part 73 can also execute driving support involving driving control of the vehicle 100 at a driving control level where the driver is involved in driving the vehicle 100, for example, a driving control level of level 1 or level 2 as defined by the SAE.

As one of the driving supports accompanying the driving control of the vehicle 100, when the driver is judged to be in an abnormal state, the driving support part 73 executes driving support for driver abnormality to respond to the driver abnormality. Specifically, when it is judged that the driver is in an abnormal state, the driving support part 73 first executes notification control to notify the driver of a control notice (alarm), etc., via the HMI 4. Thereafter, after a predetermined time T2 [s] has elapsed since starting the notification, the driving support part 73 executes deceleration and stop control (more specifically, deceleration control and stop maintenance control) to decelerate the vehicle 100 and maintain the vehicle 100 in a stopped state. Specifically, the driving support for driver abnormality includes the notification control and the deceleration and stop control (deceleration control and stop maintenance control).

Furthermore, how the vehicle 100 is decelerated and stopped is not particularly limited as long as the risk of contact with road users outside the vehicle when executing the deceleration and stop control is taken into consideration. For example, when the dividing line of the lane of the vehicle can be recognized, the vehicle 100 is decelerated along the dividing line of the lane of the vehicle and maintained in the stopped state, when the dividing line of the lane of the vehicle cannot be recognized, the vehicle 100 is decelerated along the trajectory of the vehicle ahead and maintained in the stopped state, and when neither the dividing line of the lane of the vehicle nor the vehicle ahead can be recognized, the vehicle 100 can be decelerated while moving straight and maintained in the stopped state. Furthermore, for example, in consideration of the rescue of the driver and the safety of disembarkation of passengers, the lane may be changed to move the vehicle to the lane on the roadway side or to the shoulder.

Furthermore, the driving support part 73 suspends the driving support for driver abnormality when the predetermined suspension condition is established during the driving support. The suspension condition is a condition in which it can be determined that the driver is in a normal state in which driving can be continued.

As a result, even if it is mistakenly judged that the driver is in an abnormal state and the driving support for driver abnormality is started despite the driver being in a normal state, the driver can suspend the driving support for driver abnormality by establishing the suspension condition.

However, when the content of the suspension condition is simple, for example, an unconscious driver who has fallen into an abnormal state may unintentionally perform an operation corresponding to the suspension condition, and the driving support for driver abnormality may be suspended despite the driver being in an abnormal state. Conversely, when the content of the suspension condition is complex, when the driving support for driver abnormality is being executed despite the driver being in a normal state, it may be difficult for the driver to suspend the driving support.

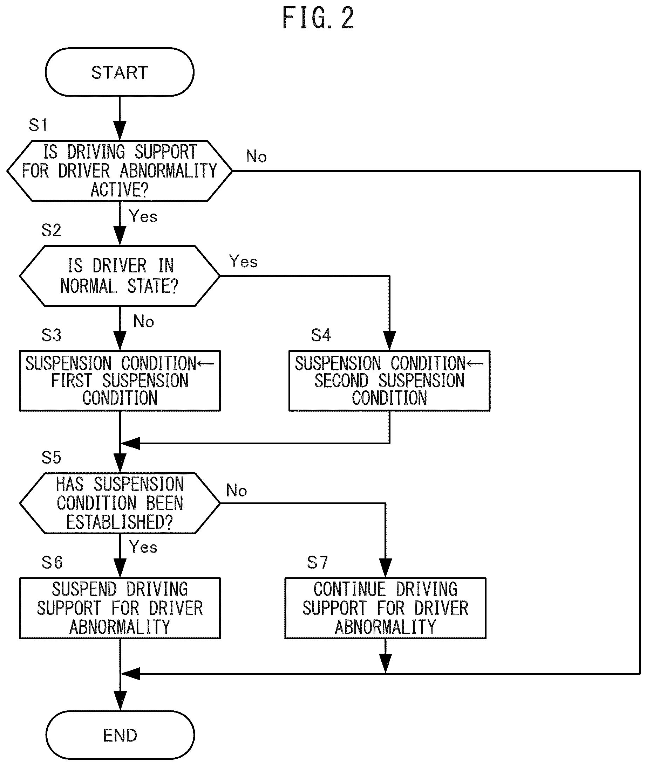

Thus, in the present embodiment, when it is judged that the driver is not in an abnormal state during the driving support for driver abnormality, the content of the suspension condition is changed (relaxed) so as to facilitate suspension of the driving support for driver abnormality. The process for suspending the driving support for driver abnormality according to the present embodiment will be described below with reference to FIG. 2.

FIG. 2 is a flowchart detailing the processing for suspending the driving support for driver abnormality according to the present embodiment, which is executed by the driving support part 73, and in turn, the control device 6. The control device 6 repeatedly executes this routine at a predetermined calculation cycle.

In step S1, the control device 6 judges whether the vehicle is in driving support for driver abnormality. When the vehicle is in driving support for driver abnormality, the control device 6 proceeds to the processing of step S2. Conversely, when the vehicle is not in driving support for driver abnormality, the control device 6 ends the current processing.

In step S2, the control device 6 judges whether it can be determined from the appearance of the driver that the driver has returned to a normal state in which driving can be continued. Specifically, the control device 6 judges whether it can be determined from the appearance of the driver that the driver has returned to a normal state based on the image of the driver monitor camera 31.

When the control device 6 cannot determine that the driver has returned to a normal state from the appearance of the driver, the control device 6 proceeds to the processing of step S3. Conversely, when the control device 6 can determine that the driver has returned to a normal state from the appearance of the driver, and specifically, when the eyes of the driver are no longer closed or the posture of the driver has reverted from a poor posture, and it can be determined that the state is no longer abnormal from the appearance of the driver, since there is a risk that the control device 6 may have mistakenly determined that the driver is in an abnormal state despite the driver being in a normal state and started the driving support for driver abnormality, the control device 6 proceeds to the processing of step S4.

In step S3, the control device 6 sets the suspension condition of the driving support for driver abnormality to a normal first suspension condition.

In step S4, the control device 6 sets the suspension condition of the driving support for driver abnormality to a second suspension condition which can more easily be established than the normal first suspension condition.

In the present embodiment, it is judged that a cancel operation has been performed once each time any one of a steering operation, an accelerator operation, and a brake operation is performed once, and the first suspension condition is that a cancel operation has been detected a predetermined first number of times N1 (for example, three times), and the second suspension condition is that a cancel operation has been detected a predetermined second number of times N2 (for example, twice), which is less than the first number of times N1. Note that in the present embodiment, regarding whether each of the steering operation, accelerator operation, and brake operation has been performed, when the operation change amount of each operation becomes equal to or greater than a predetermined amount or simply when an operation input for each operation is detected, it may be judged that the operation has been performed.

In this manner, in the present embodiment, when it can be determined that the driver has returned to a normal state during the driving support for driver abnormality, and specifically, when there is a risk that it has been mistakenly judged that the driver is in an abnormal state and the driving support for driver abnormality is started despite the driver being in a normal state, since the number of cancel operations required to suspend the driving support for driver abnormality is reduced, the suspension condition is relaxed as compared to under normal circumstances. Thus, situations in which the driver cannot suspend the driving support for driver abnormality when the driving support is being executed despite the driver being in a normal state can be prevented.

Furthermore, since the suspension condition is more difficult to establish under normal circumstances, establishment of the suspension condition and suspension of the driving support for driver abnormality can be prevented, for example, when an unintentional steering operation is performed by a driver who has lost consciousness and is leaning over the steering wheel, when an unintentional pedal operation is performed by a driver who has become rigid due to epilepsy, or when an unintentional steering operation or pedal operation is performed by a driver who has become abnormal. Thus, situations in which the driving support for driver abnormality is suspended due to an unintentional override during the driving support despite the driver being in an abnormal state can be prevented.

In step S5, the control device 6 judges whether the suspension condition of the driving support for driver abnormality has been established. When the suspension condition of the driving support for driver abnormality has been established, the control device 6 proceeds to the processing of step S6. Conversely, when the suspension condition of the driving support for driver abnormality has not been established, the control device 6 proceeds to the processing of step S7.

In step S6, the control device 6 suspends the driving support for driver abnormality.

In step S7, the control device 6 continues the driving support for driver abnormality.

In the present embodiment, as described above, the first suspension condition is that a predetermined cancel operation has been detected a predetermined first number of times N1, and the second suspension condition is that a cancel operation has been detected a predetermined second number of times N2, which is less than the first number of times N1.

However, the first suspension condition and the second suspension condition are not limited to such conditions, and for example, in the embodiment described above, the first suspension condition may be that a cancel operation has been detected a predetermined number of times N3 (for example, twice) within a predetermined first time TS1 [s], and the second suspension condition may be that a cancel operation has been detected the predetermined number of times N3 within a predetermined second time TS2 [s], which is longer than the first time TS1.

As a result, in the case in which a cancel operation being performed a predetermined number of times within a predetermined time serves as the suspension condition, since the predetermined time is extended when it can be determined that the driver has returned to a normal state during the driving support for driver abnormality, the suspension condition is relaxed as compared to under normal circumstances. Thus, situations in which the driver cannot suspend the driving support for driver abnormality when the driving support is being executed despite the driver being in a normal state can be prevented.

Furthermore, for example, in the embodiment described above, when the operation change amount of each of the steering operation, accelerator operation, and brake operation becomes equal to or greater than a predetermined amount, it may be judged that the operation has been performed, and the first suspension condition may be that the operation change amount of each operation becomes equal to or greater than a predetermined first judgment threshold, and the second suspension condition may be that the operation change amount of each operation becomes equal to or greater than a predetermined second judgment threshold, which is less than the first judgment threshold.

As a result, when it can be determined that the driver has returned to a normal state during the driving support for driver abnormality, since the suspension condition is established even if the operation change amount of each operation is relatively small, the suspension condition can more easily be established as compared to under normal circumstances. Thus, situations in which the driver cannot suspend the driving support for driver abnormality when the driving support is being executed despite the driver being in a normal state can be prevented.

The control device 6 (driving support control device) of the vehicle 100 according to the present embodiment described above is configured to execute driving support for driver abnormality for responding to driver abnormality in response to it being judged that the driver of the vehicle 100 is in an abnormal state in which it is difficult to continue driving of the vehicle 100, suspend the driving support for driver abnormality when a predetermined suspension condition is established during the driving support, and change the content of the suspension condition so as to facilitate suspension of the driving support for driver abnormality when it is judged that the driver is not in an abnormal state during the driving support.

Specifically, the control device 6 according to the present embodiment is configured to suspend the driving support in response to a predetermined cancel operation being detected a predetermined number of times during the driving support for driver abnormality, and reduce the predetermined number of times when it is judged that the driver is not in an abnormal state during the driving support for driver abnormality.

As a result, when it is determined that the driver has returned to a normal state during the driving support for driver abnormality, and specifically, when there is a risk that it may have mistakenly been judged that the driver is in an abnormal state and the driving support for driver abnormality is started despite the driver being in a normal state, since the number of cancel operations required to suspend the driving support for driver abnormality is reduced, the suspension condition is relaxed as compared to under normal circumstances. Thus, situations in which the driver cannot suspend the driving support for driver abnormality when the driving support is being executed despite the driver being in a normal state can be prevented.

Furthermore, the control device 6 can also be configured to suspend the driving support in response to a predetermined cancel operation being detected a predetermined number of times during the driving support for driver abnormality, and extend the predetermined time when it is judged that the driver is not in an abnormal state during the driving support for driver abnormality.

As a result, in the case in which a cancel operation being detected a predetermined number of times within a predetermined time serves as the suspension condition, since the predetermined time is extended when it is determined that the driver has returned to a normal state during the driving support for driver abnormality, the suspension condition can be relaxed as compared to under normal circumstances. Thus, situations in which the driver cannot suspend the driving support for driver abnormality when the driving support is being executed despite the driver being in a normal state can be prevented.

Furthermore, the control device 6 can be configured to suspend the driving support in response to the operation change amount of at least one of the steering operation of the vehicle 100 and the pedal operation of the vehicle 100 being equal to or greater than a predetermined judgment threshold during the driving support for driver abnormality, and reduce the judgment threshold when it is judged that the driver is not in an abnormal state during the driving support for driver abnormality.

As a result, when it is determined that the driver has returned to a normal state during the driving support for driver abnormality, since the suspension condition is established even if the operation change amount of each operation is relatively small, the suspension condition can more easily be established as compared to under normal circumstances. Thus, situations in which the driver cannot suspend the driving support for driver abnormality when the driving support is being executed despite the driver being in a normal state can be prevented.

Though the embodiments of the present invention have been described above, the embodiments described above merely illustrate some of the application examples of the present invention, and are not intended that the technical scope of the present invention be limited to the specific configurations of the embodiments described above.

For example, a combination of the suspension conditions described in each of the embodiments described above may be made the suspension condition.

Furthermore, for example, in the embodiments described above, the computer program executed by the control device 6 may be provided in a form recorded on a computer-readable portable recording medium such as a semiconductor memory, a magnetic recording medium, or an optical recording medium, or may be provided as a computer program product.

### REFERENCE SIGNS LIST

- 6: control device (driving support control device)
- 100: vehicle

## Claims

1. A driving support control device (6) for a vehicle (100), configured to:
execute driving support for responding to driver abnormality in response to it being judged that a driver of the vehicle (100) is in an abnormal state in which it is difficult to continue driving of the vehicle (100);
suspend the driving support when a predetermined suspension condition is established during the driving support; and
when it is judged that the driver is not in the abnormal state during the driving support, change content of the suspension condition so as to facilitate suspension of the driving support.

2. The driving support control device (6) according to claim 1, configured to:
suspend the driving support in response to a predetermined cancel operation being detected a predetermined number of times during the driving support; and
when it is judged that the driver is not in the abnormal state during the driving support, reduce the predetermined number of times.

3. The driving support control device (6) according to claim 1, configured to:
suspend the driving support in response to a predetermined cancel operation being detected a predetermined number of times within a predetermined time during the driving support; and
when it is judged that the driver is not in the abnormal state during the driving support, extend the predetermined time.

4. The driving support control device (6) according to claim 1, configured to:
suspend the driving support in response to an operation change amount of at least one of a steering operation of the vehicle (100) and a pedal operation of the vehicle (100) being equal to or greater than a predetermined judgment threshold during the driving support; and
when it is judged that the driver is not in the abnormal state during the driving support, reduce the judgment threshold.

5. The driving support control device (6) according to claim 2 or 3, wherein the cancel operation includes a steering operation of the vehicle (100) and a pedal operation of the vehicle (100).

6. The driving support control device (6) according to any one of claims 1 to 5, wherein the driving support includes:
notification control being started in response to it being judged that the driver is in an abnormal state, and issuing a notification to the driver; and
deceleration and stop control being started after a predetermined time has elapsed since the notification started, and decelerating the vehicle (100) and maintaining the vehicle (100) in a stopped state.

7. A driving support method for a vehicle (100), including:
executing driving support for responding to driver abnormality in response to it being judged that a driver of the vehicle (100) is in an abnormal state in which it is difficult to continue driving of the vehicle (100);
suspending the driving support when a predetermined suspension condition is established during the driving support; and
changing content of the suspension condition so as to facilitate suspension of the driving support when it is judged that the driver is not in the abnormal state during the driving support.

8. A computer program which causes a computer to execute processing of:
executing driving support for responding to driver abnormality in response to it being judged that a driver of the vehicle (100) is in an abnormal state in which it is difficult to continue driving of the vehicle (100);
suspending the driving support when a predetermined suspension condition is established during the driving support; and
changing content of the suspension condition so as to facilitate suspension of the driving support when it is judged that the driver is not in the abnormal state during the driving support.
